# EUROPÄISCHE PATENTANMELDUNG

(11) **EP 3 705 209 A1**
(43) Veröffentlichungstag der Anmeldung: **09.09.2020**
(21) Anmeldenummer: 19160677.1
(22) Anmeldetag: 05.03.2019
(51) Int. Cl.: B22F 3/105, B22F 7/08, B33Y 80/00, B33Y 30/00, B29C 64/153, B33Y 10/00

(54) **BAUTEIL UND VERFAHREN ZUM HERSTELLEN EINES SOLCHEN BAUTEILS**

(71) Anmelder: Siemens Aktiengesellschaft, 80333 München (DE)
(72) Erfinder: Doye, Christian, 13156 Berlin (DE); Jensen, Jens Dahl, 14050 Berlin (DE); Krüger, Ursus, 14089 Berlin (DE); Neubert, Heinz, 73095 Albershausen (DE)

(57) **Zusammenfassung**

Die Erfindung betrifft ein Bauteil (10), mit wenigstens einem durch ein generatives Fertigungsverfahren hergestellten Bauteilbereich (12), und mit wenigstens einer separat von dem Bauteilbereich (12) hergestellten und mit dem Bauteilbereich (12) verbundenen Stützstruktur (14), mittels welcher der Bauteilbereich (12) versteift ist.

## Beschreibung

Die Erfindung betrifft ein Bauteil und ein Verfahren zum Herstellen eines solchen Bauteils.

Die Entwicklung von neuen, additiven Fertigungsverfahren, welche auch als generative Fertigungsverfahren bezeichnet werden, hat in den letzten Jahren deutlich zugenommen und neue Herstellungsmöglichkeiten eröffnet, insbesondere zur Herstellung von komplexen 3D-Strukturen, das heißt zur Herstellung von Bauteilen, welche komplexe dreidimensionale Strukturen aufweisen. Mittels generativer Fertigungsverfahren können solche komplexe 3D-Strukturen hergestellt werden, die durch konventionelle Herstellungsverfahren nur sehr schwierig oder gar nicht hergestellt werden konnten. Insbesondere bei der Herstellung von dreidimensionalen Komponenten (SD-Komponenten) aus Kunststoff existieren mittlerweile sehr viele unterschiedliche Verfahren, insbesondere generative Fertigungsverfahren.

Aufgabe der vorliegenden Erfindung ist es, ein Bauteil und ein Verfahren zu schaffen, sodass sowohl eine besonders komplexe Geometrie als auch eine besonders hohe Steifigkeit beziehungsweise Festigkeit des Bauteils realisiert werden können.

Diese Aufgabe wird erfindungsgemäß durch ein Bauteil mit den Merkmalen des Patentanspruchs 1 sowie durch ein Verfahren mit den Merkmalen des Patentanspruchs 10 gelöst. Vorteilhafte Ausgestaltungen mit zweckmäßigen Weiterbildungen der Erfindung sind in den übrigen Ansprüchen angegeben.

Ein erster Aspekt der Erfindung betrifft ein Bauteil, welches wenigstens einen durch ein generatives Fertigungsverfahren und somit additiv hergestellten Bauteilbereich aufweist. Das generative Fertigungsverfahren wird auch als additives Fertigungsverfahren oder additive Fertigung bezeichnet. Darunter ist insbesondere zu verstehen, dass der Bauteilbereich beispielsweise aus mehreren Schichten und somit schichtweise beziehungsweise Schicht für Schicht hergestellt beziehungsweise aufgebaut ist. Die Schichten sind dabei jeweils zumindest teilweise aufeinander angeordnet und miteinander verbunden.

Durch das generative Fertigungsverfahren ist es möglich, eine besonders komplexe Geometrie, insbesondere eine besonders komplexe außenumfangsseitige Geometrie, des Bauteilbereichs und somit des Bauteils insgesamt zu schaffen. Insbesondere kann der Bauteilbereich beziehungsweise das Bauteil als eine, insbesondere zumindest außenumfangsseitig, besonders komplexe dreidimensionale Struktur ausgebildet sein, welche auch als 3D-Struktur bezeichnet wird. Dabei ist es mittels des generativen Fertigungsverfahrens möglich, die sehr komplexe dreidimensionale Struktur zeit- und kostengünstig herzustellen.

Um dabei besonders vorteilhafte, insbesondere mechanische, Eigenschaften und insbesondere eine besonders hohe Steifigkeit beziehungsweise Festigkeit des Bauteils insgesamt realisieren zu können, ist es erfindungsgemäß vorgesehen, dass das Bauteil außerdem wenigstens eine separat von dem Bauteilbereich hergestellte und mit dem Bauteilbereich zumindest mittelbar, insbesondere direkt, verbundene Stützstruktur aufweist, mittels welcher das Bauteil versteift beziehungsweise ausgesteift ist. Unter dem Merkmal, dass die Stützstruktur separat von dem Bauteilbereich hergestellt ist, kann insbesondere verstanden werden, dass die Stützstruktur unabhängig von dem Bauteilbereich hergestellt ist beziehungsweise wird, sodass beispielsweise dann, wenn der Bauteilbereich mit der Stützstruktur verbunden ist, die Stützstruktur bereits, insbesondere vollständig beziehungsweise fertig, hergestellt ist. Mit anderen Worten ist es beispielsweise vorgesehen, dass der Bauteilbereich in einem Zustand mit der Stützstruktur verbunden wird, wobei in dem Zustand die Stützstruktur bereits, insbesondere vollständig oder fertig, hergestellt ist.

Der Erfindung liegen insbesondere die folgenden Erkenntnisse zugrunde: Generative beziehungsweise additive Fertigungsverfahren ermöglichen es, komplexe, dreidimensionale Strukturen, das heißt sogenannte 3D-Strukturen, herzustellen, die durch konventionelle, von generativen Fertigungsverfahren unterschiedliche Herstellungsverfahren nur sehr schwierig oder gar nicht hergestellt werden konnten. Dabei existiert eine hohe Anzahl an unterschiedlichen, generativen Fertigungsverfahren zum generativen beziehungsweise additiven Fertigen von Bauelementen beziehungsweise Bauteilbereichen. Es wurde jedoch gefunden, dass bei Bauteilen, welche einzig und allein durch ein jeweiliges generatives Fertigungsverfahren hergestellt wurden, oft nur unzureichend hohe Materialsteifigkeiten beziehungsweise -festigkeiten realisiert werden können. Insbesondere bei vielen, aus Kunststoff gefertigten Komponenten reichen die Materialsteifigkeiten der Komponenten beziehungsweise von Kunststoffmaterialien, aus welchen die Komponenten hergestellt sind, nicht aus, um hinreichend hohe Lasten schadfrei zu ertragen, das heißt auszuhalten. Dies gilt insbesondere für filigrane Aufbauten beziehungsweise Bauteile oder Bauteilbereiche, die durch generative Fertigungsverfahren wie beispielsweise 3D-Druckverfahren zeit- und kostengünstig hergestellt werden können.

Typischerweise werden durch generative Fertigungsverfahren hergestellte und beispielsweise als 3D-Kunststoffkomponenten ausgebildete dreidimensionale Strukturen für den Prototypen-Modellbau verwendet, wo keine besonderen Anforderungen an die Materialsteifigkeiten gestellt werden. Sobald aber mechanisch belastbare Komponenten erwünscht sind, wird typischerweise auf metallische Materialien und insbesondere auf konventionelle Fertigungs- beziehungsweise Herstellungsverfahren umgestellt, mittels welchen die Komponenten jedoch im Vergleich zu generativen Fertigungsverfahren nur aufwendiger und somit kostenintensiver hergestellt werden können.

Somit ist es erfindungsgemäß vorgesehen, die Stützstruktur zu verwenden und mit dem Bauteilbereich zu verbinden, um dadurch den Bauteilbereich beziehungsweise das Bauteil insgesamt auszusteifen. Hierzu ist beziehungsweise wird beispielsweise die Stützstruktur zumindest teilweise in den additiv beziehungsweise generativ hergestellten Bauteilbereich eingebracht, um den Bauteilbereich und somit das Bauteil hinreichend versteifen beziehungsweise aussteifen zu können. Dadurch können hinreichend hohe Festigkeiten und/oder Steifigkeiten des Bauteils insgesamt geschaffen werden. Mit anderen Worten, unter dem zumindest teilweisen Einbringen der Stützstruktur in den Teilbereich kann insbesondere verstanden werden, dass die separat von dem Bauteilbereich hergestellte Stützstruktur zumindest mittelbar, insbesondere direkt, mit dem Bauteilbereich verbunden ist, insbesondere derart, dass die Stützstruktur den Bauteilbereich stützt oder trägt und dadurch versteift beziehungsweise aussteift. Insbesondere kann darunter, dass die Stützstruktur zumindest teilweise in dem Bauteilbereich angebracht wird, verstanden werden, dass der Bauteilbereich die Stützstruktur, insbesondere außenumfangsseitig, zumindest teilweise umgibt und/oder dass die Stützstruktur zumindest teilweise innerhalb des Bauteilbereichs angeordnet ist. Dadurch kann der Bauteilbereich mittels der Stützstruktur besonders effektiv und effizient versteift beziehungsweise ausgesteift werden.

Die Stützstruktur ist beispielsweise ihrerseits eine dreidimensionale Struktur, das heißt eine 3D-Struktur beziehungsweise eine 3D-Komponente, durch welche besonders vorteilhafte, insbesondere mechanische, Eigenschaften des Bauteils insgesamt realisiert werden können. In der Folge kann das erfindungsgemäße Bauteil im Vergleich zu solchen Bauteilen, welche ausschließlich durch ein generatives Fertigungsverfahren hergestellt sind, mechanisch stärker und belastbarer gefertigt beziehungsweise ausgebildet werden.

Als besonders vorteilhaft hat es sich gezeigt, wenn der Bauteilbereich und die Stützstruktur aus voneinander unterschiedlichen Werkstoffen gebildet sind. Mit anderen Worten hat es sich als vorteilhaft gezeigt, wenn der Bauteilbereich aus einem ersten Werkstoff und die Stützstruktur aus einem von dem ersten Werkstoff unterschiedlichen zweiten Werkstoff gebildet sind. Hierdurch kann beispielsweise auf einfache, zeit- und kostengünstige Weise eine besonders komplexe Struktur, insbesondere dreidimensionale Struktur, des Bauteilbereichs an sich realisiert werden. Außerdem kann der Bauteilbereich dadurch mittels der Stützstruktur effektiv und effizient ausgesteift werden. Der jeweilige Werkstoff weist beispielsweise genau ein Material oder mehrere, insbesondere miteinander vermischte, Materialien auf.

Um eine besonders hohe Steifigkeit beziehungsweise Festigkeit des Bauteils insgesamt realisieren zu können, ist es in weiterer Ausgestaltung der Erfindung vorgesehen, dass die Stützstruktur durch ein von einem generativen Fertigungsverfahren unterschiedliches, insbesondere konventionelles, Fertigungsverfahren hergestellt ist. Dadurch können eine hohe Steifigkeit und Festigkeit der Stützstruktur realisiert werden, wodurch der Bauteilbereich effektiv und effizient ausgesteift werden kann. Ferner können insgesamt die Kosten des Bauteils gering gehalten werden, da der Bauteilbereich zeit- und kostengünstig durch das generative Fertigungsverfahren und beispielsweise bezogen auf den Bauteilbereich und die Stützstruktur ausschließlich die Stützstruktur konventionell hergestellt werden kann.

Bei einer besonders vorteilhaften Ausführungsform der Erfindung umfasst der zweite Werkstoff einen metallischen Werkstoff und/oder einen keramischen Werkstoff, sodass die Stützstruktur aus wenigstens oder genau einem metallischen Werkstoff und/oder aus wenigstens oder genau einem keramischen Werkstoff gebildet ist. Dadurch kann auf gewichtsgünstige Weise eine besonders hohe Steifigkeit beziehungsweise Festigkeit des Bauteils insgesamt dargestellt werden.

Um eine besonders hohe Steifigkeit beziehungsweise Festigkeit des Bauteils realisieren und dabei gleichzeitig das Gewicht des Bauteils besonders gering halten zu können, ist es in weiterer Ausgestaltung der Erfindung vorgesehen, dass der metallische Werkstoff einen Stahl und/oder Aluminium beziehungsweise eine Aluminiumlegierung und/oder Titan beziehungsweise eine Titanlegierung aufweist.

Als weiterhin besonders vorteilhaft hat es sich gezeigt, wenn die Stützstruktur aus einem Kompositwerkstoff, insbesondere aus einem faserverstärkten Kunststoff, gebildet ist. Unter dem Kompositwerkstoff kann insbesondere ein Verbundwerkstoff beziehungsweise ein Werkstoff verstanden werden, welcher aus wenigstens oder genau zwei oder demgegenüber mehr, insbesondere miteinander verbundenen und/oder vermischten, Materialien gebildet ist. Hierdurch kann auf gewichtsgünstige Weise eine besonders hohe Steifigkeit und Festigkeit des Bauteils insgesamt dargestellt werden.

In weiterer Ausgestaltung der Erfindung ist beziehungsweise wird die Stützstruktur, insbesondere nach deren Herstellung und/oder nach Herstellung des Bauteilbereichs, durch Anodisieren und/oder Oxidieren beziehungsweise Anoxidieren mit dem Bauteilbereich verbunden. Dadurch kann eine besonders feste Verbindung zwischen dem Bauteilbereich und der Stützstruktur gewährleistet werden, sodass das erfindungsgemäße Bauteil auch besonders hohe Lasten schadfrei aushalten beziehungsweise ertragen kann.

Unter dem Merkmal, dass die Stützstruktur nach deren, insbesondere vollständiger, Herstellung mit dem Bauteilbereich verbunden wird, ist insbesondere zu verstehen, dass zunächst die Stützstruktur, insbesondere unabhängig von dem Bauteilbereich und somit separat von dem Bauteilbereich, hergestellt wird. Daran anschließend wird die Stützstruktur in ihrem, insbesondere vollständig, hergestellten Zustand mit dem Bauteilbereich verbunden. Beispielsweise wird der Bauteilbereich mit der bereits hergestellten Stützstruktur verbunden, während der Bauteilbereich durch das generative Fertigungsverfahren hergestellt wird. Somit wird beispielsweise der Bauteilbereich durch das generative Fertigungsverfahren und während des generativen Fertigungsverfahrens, durch welches der Bauteilbereich additiv gefertigt, das heißt hergestellt, wird, mit der Stützstruktur verbunden.

Unter dem Merkmal, dass der Bauteilbereich nach dessen, insbesondere vollständiger, Herstellung mit der Stützstruktur verbunden wird, kann insbesondere verstanden werden, dass zunächst der Bauteilbereich unabhängig von der Stützstruktur und somit separat von der Stützstruktur hergestellt wird. Erst nach der Herstellung des Bauteilbereichs wird der Bauteilbereich mit der Stützstruktur verbunden. Beispielsweise werden der Bauteilbereich und die Stützstruktur unabhängig beziehungsweise separat voneinander jeweils hergestellt und in jeweils, insbesondere vollständig, hergestelltem Zustand bereitgestellt. Dabei werden beispielsweise der Bauteilbereich und die Stützstruktur miteinander in einem Zustand verbunden, in welchem sowohl die Stützstruktur als auch der Bauteilbereich bereits, also vollständig, hergestellt sind. Hierdurch kann das Bauteil insgesamt besonders einfach und somit zeit- und kostengünstig hergestellt werden, und es können besonders vorteilhafte, insbesondere mechanische, Eigenschaften des Bauteils realisiert werden.

Eine weitere Ausführungsform zeichnet sich dadurch aus, dass der Bauteilbereich an sich, das heißt für sich betrachtet, wenigstens eine, insbesondere durch Anodisieren und/oder Oxidieren, behandelte Oberfläche aufweist, über welche der Bauteilbereich mit der Stützstruktur, insbesondere direkt, verbunden ist. Dadurch kann eine besonders feste Verbindung zwischen der Stützstruktur und dem Bauteilbereich realisiert werden, sodass der Bauteilbereich mittels der Stützstruktur effektiv und effizient versteift beziehungsweise ausgesteift werden kann.

Schließlich hat es sich als besonders vorteilhaft gezeigt, wenn der Bauteilbereich aus einem Kunststoff gebildet ist. Der Kunststoff kann ein faserverstärkter Kunststoff sein, oder der Kunststoff ist ein von einem faserverstärkten Kunststoff unterschiedlicher Kunststoff, sodass der Kunststoff vorzugsweise ein nicht-faserverstärkter Kunststoff ist. Dadurch können auch besonders komplexe, dreidimensionale Geometrien beziehungsweise Strukturen des Bauteilbereichs zeit- und kostengünstig durch das generative Fertigungsverfahren hergestellt werden.

Insbesondere kann der Bauteilbereich als eine dreidimensionale Komponente, insbesondere als eine 3D-Komponente, hergestellt werden. Als das generative Fertigungsverfahren wird beispielsweise ein Materialextrusionsverfahren wie beispielsweise Schmelzschichtung (FDM - Fused Deposition Modelling oder FFF - Fused Filament Fabrication), CFF (Composite Filament Fabrication), PJP (Plastic Jet Printing), MEM (Melted Extrusion Modelling) etc. verwendet. Ferner kann es sich bei dem generativen Fertigungsverfahren um eines oder mehrere der folgenden Verfahren handeln: VAT Fotopolymerisationsverfahren, Stereolithografie (SLA), DLP (Digital Light Processing), 3SP (Scan, Spin and Photocure), CLIP (Continuous Liquid Interface Production), LAMP (Large Area Maskless Photopolymerization), Pulverbettverfahren beziehungsweise Pulverbettfusionsverfahren (Powderbed Fusion Verfahren), selektives Lasersintern (SLS - Selective Laser Sintering), Sheet-Lamination-Verfahren, UC (Ultrasonic Consolidation), UAM (Ultrasonic Additive Manufacturing), LOM (Laminated Object Manufacturing), SDL (Selective Deposition Lamination), selektives Laserschmelzen (SLM - Selective Laser Melting) oder ein anderes Verfahren.

Die Stützstruktur wird beispielsweise an wenigstens einer Stelle des Bauteilbereichs beziehungsweise in wenigstens einem Bereich des Bauteilbereichs angeordnet, wobei die Stelle beziehungsweise der Bereich beispielsweise eine kritische Stelle beziehungsweise ein kritischer Bereich ist. Die kritisehe Stelle beziehungsweise der kritische Bereich wird beispielsweise durch Modellierung und Berechnungen, insbesondere Finite-Elemente-Berechnungen, festgestellt beziehungsweise identifiziert. Durch ein solches Einbringen einer beispielsweise metallischen, keramischen oder kompositbasierten Stützstruktur an wenigstens einer kritischen Stelle oder an kritischen Stellen des Bauteilbereichs, welcher beispielsweise als 3D-gedruckte Kunststoffkomponente ausgebildet ist, ist es möglich, eine besonders hohe Steifigkeit beziehungsweise Festigkeit des Bauteils insgesamt zu schaffen. Das zuvor beschriebene Behandeln der Oberfläche des Bauteilbereichs wird auch als Oberflächenbehandlung bezeichnet, wodurch der Bauteilbereich, insbesondere dessen Werkstoff beziehungsweise Kunststoff, einen besonders festen Verbund mit der Stützstruktur, insbesondere deren Werkstoff, eingehen kann.

Ein zweiter Aspekt der Erfindung betrifft ein Verfahren zum Herstellen eines Bauteils, insbesondere gemäß dem ersten Aspekt der Erfindung. Bei dem Verfahren wird wenigstens ein Bauteilbereich des Bauteils durch ein generatives Fertigungsverfahren hergestellt. Außerdem wird bei dem Verfahren eine separat von dem Bauteilbereich hergestellte Stützstruktur bereitgestellt. Beispielsweise wird die Stützstruktur im Rahmen des Verfahrens separat, das heißt unabhängig von dem Bauteilbereich, hergestellt, wobei beispielsweise der Bauteilbereich und die Stützstruktur separat beziehungsweise unabhängig voneinander hergestellt werden können. Bei dem Verfahren wird die Stützstruktur mit dem Bauteilbereich verbunden, wodurch der Bauteilbereich mittels der Stützstruktur versteift beziehungsweise ausgesteift wird. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Bei dem Verfahren kann vorgesehen sein, dass ein, insbesondere virtuelles, Modell, insbesondere Rechenmodell, des, insbesondere herzustellenden, Bauteils erstellt wird. Beispielsweise wird das Modell mittels einer elektronischen Recheneinrichtung erstellt. Ferner ist es denkbar, dass mittels der elektronischen Recheneinrichtung und/oder einer weiteren elektronischen Recheneinrichtung anhand des Modells eine Simulation beziehungsweise eine Berechnung, insbesondere eine Finite-Elemente-Berechnung, durchgeführt wird, um anhand der Simulation beziehungsweise anhand der Simulation wenigstens eine kritische Stelle des Modells zu identifizieren. Beispielsweise wird dann die Stützstruktur an einer mit der identifizierten kritischen Stelle korrespondierenden kritischen Stelle des tatsächlichen Bauteilbereichs angeordnet, wobei die Stützstruktur insbesondere in die kritische Stelle des tatsächlichen Bauteilbereichs eingebracht wird. Hierdurch werden der Bauteilbereich und somit das tatsächliche Bauteil vorteilhaft verstärkt, wodurch das Bauteil auch hohe Lasten schadfrei ertragen kann.

Die Erfindung sieht somit beispielsweise die Einbringung der insbesondere vorgefertigten Stützstruktur, welche beispielsweise aus einem Metall- oder Kompositmaterial gebildet ist, in den beispielsweise durch 3D-Drucken hergestellten Bauteilbereich vor, sodass die Einbringung der Stützstruktur mit dem generativen Fertigungsverfahren zum Herstellen des Bauteilbereichs kombiniert ist. Hierdurch kann das Bauteil als verstärkte, dreidimensionale Komponente, insbesondere als verstärkte, dreidimensionale Kunststoffkomponente (verstärkte 3D-Kunststoffkomponente), hergestellt werden, sodass das erfindungsgemäße Bauteil gegenüber herkömmlichen Bauteilen eine höhere mechanische Belastbarkeit aufweist.

Alternativ oder zusätzlich ist es denkbar, dass die Stützstruktur an sich, das heißt für sich alleine betrachtet, wenigstens eine, insbesondere durch Anodisieren und/oder Oxidieren, behandelte weitere Oberfläche aufweist, über welche die Stützstruktur mit dem Bauteilbereich, insbesondere direkt, verbunden ist. Somit ist alternativ oder zusätzlich die Oberfläche der Stützstruktur einer Behandlung, insbesondere eine Oberflächenbehandlung, unterzogen, insbesondere durch Oxidieren beziehungsweise Anoxidieren und/oder durch Anodisieren. Hierdurch kann insbesondere dann, wenn die Stützstruktur aus Aluminium, einem Stahl oder Titan gebildet ist, sodass die Oberfläche der Stützstruktur beispielsweise durch das Aluminium, den Stahl beziehungsweise das Titan gebildet ist, die Stützstruktur über ihre behandelte Oberfläche besonders fest mit dem Bauteilbereich verbunden werden, insbesondere über die, insbesondere behandelte, Oberfläche des Bauteilbereichs. Somit ist es denkbar, dass die Stützstruktur und der Bauteilbereich über die Oberfläche des Bauteilbereichs und/oder über die Oberfläche der Stützstruktur fest miteinander verbunden sind. Mit anderen Worten ermöglicht es eine spezifische Oberflächenbehandlung der beispielsweise metallischen Stützstruktur, insbesondere der beschriebenen Oberfläche der Stützstruktur, einen besonders vorteilhaften und festen Verbund aus der Stützstruktur und dem Bauteilbereich zu bilden, insbesondere dann, wenn der Bauteilbereich aus einem Kunststoff und dabei beispielsweise durch 3D-Drucken hergestellt ist.

Ferner kann das erfindungsgemäße Verfahren eine Modellierung von mechanischen Belastungen des beispielsweise als 3D-Kunststoff-Komponente ausgebildeten Bauteils vorsehen, um eine genaue Geometrie der insbesondere als Metall-Stützstruktur ausgebildeten Stützstruktur zu bestimmen. Somit kann alternativ oder zusätzlich vorgesehen sein, dass in Abhängigkeit von der zuvor genannten Berechnung beziehungsweise Simulation eine Geometrie der Stützstruktur bestimmt wird, wobei dann durch das generative Fertigungsverfahren beispielsweise die bestimmte Geometrie der Stützstruktur und somit die Stützstruktur selbst hergestellt werden. Hierdurch kann mit einem Minimum an Stützstruktur ein Maximum an Belastbarkeit des beispielsweise als 3D-gedruckte Kunststoffkomponente ausgebildeten Bauteilbereichs beziehungsweise des Bauteils insgesamt geschaffen werden.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- FIG 1: ausschnittsweise eine schematische und geschnittene Perspektivansicht eines erfindungsgemäßen Bauteils; und
- FIG 2: ein Flussdiagramm zum Veranschaulichen eines erfindungsgemäßen Verfahrens.

In den Figuren sind gleiche oder funktionsgleiche Elemente mit gleichen Bezugszeichen versehen.

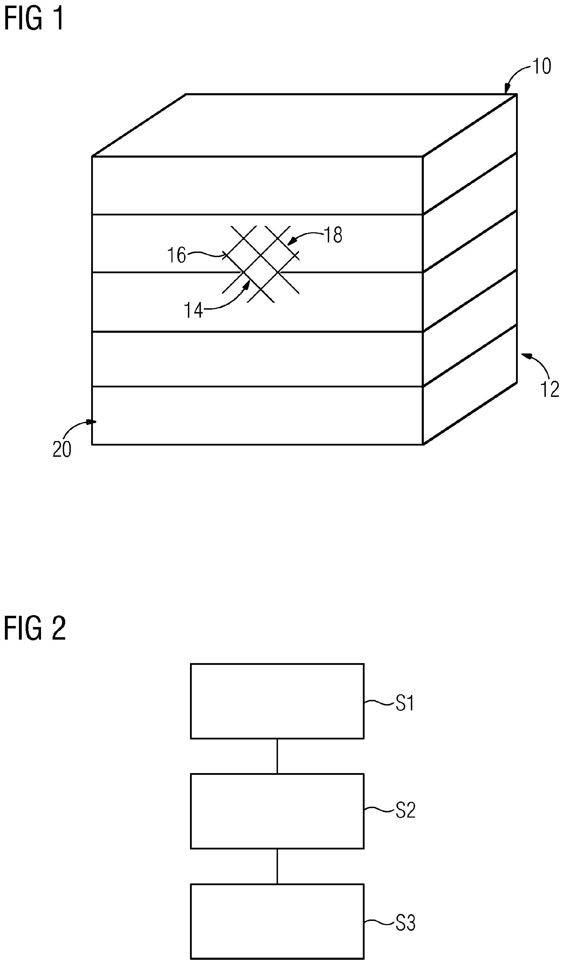

FIG 1 zeigt ausschnittsweise in einer schematischen und geschnittenen Perspektivansicht ein Bauteil 10, welches wenigstens oder genau einen Bauteilbereich 12 und wenigstens oder genau eine Stützstruktur 14 aufweist. Der Bauteilbereich 12 ist dabei durch ein generatives Fertigungsverfahren und dabei beispielsweise durch 3D-Drucken hergestellt. Die Stützstruktur 14 ist dabei separat von dem Bauteilbereich 12 hergestellt und zumindest mittelbar, insbesondere direkt, mit dem Bauteilbereich 12 verbunden. Mittels der Stützstruktur 14 ist der Bauteilbereich 12 versteift, sodass eine besonders hohe Steifigkeit und eine besonders hohe Festigkeit des Bauteils 10 insgesamt realisiert werden können. Der Bauteilbereich 12 ist vorzugsweise aus einem Kunststoff gebildet, welcher vorzugsweise ein faserverstärkter Kunststoff oder aber vorzugsweise ein nicht faserverstärkter Kunststoff ist. Der Bauteilbereich 12 ist somit beispielsweise als 3D-gedruckte Kunststoffkomponente ausgebildet, sodass eine besonders komplexe Geometrie des Bauteilbereichs 12 auf besonders zeit- und kostengünstige Weise durch das generative Fertigungsverfahren hergestellt und somit realisiert werden kann.

Die Stützstruktur 14 ist vorzugsweise aus einem metallischen oder keramischen Werkstoff oder aus einem Kompositwerkstoff gebildet, welcher auch als Verbundwerkstoff bezeichnet wird. Beispielsweise ist die Stützstruktur 14 durch ein von einem generativen Fertigungsverfahren unterschiedliches, insbesondere konventionelles, Fertigungsverfahren hergestellt. Der Bauteilbereich 12 an sich weist beispielsweise wenigstens eine in FIG 1 besonders schematisch dargestellte erste Oberfläche 16 auf. Alternativ oder zusätzlich weist die Stützstruktur 14 wenigstens eine in FIG 1 besonders schematisch dargestellte zweite Oberfläche 18 auf. Der Bauteilbereich 12 und die Stützstruktur 14 sind beispielsweise über die Oberflächen 16 und 18, insbesondere direkt, miteinander verbunden, indem sich beispielsweise die Oberflächen 16 und 18, insbesondere direkt, gegenseitig berühren. Um dabei den Bauteilbereich 12 mit der Stützstruktur 14 über die Oberflächen 16 und 18 besonders fest verbinden zu können, ist wenigstens eine der Oberflächen 16 und 18 einer Oberflächenbehandlung unterzogen und somit behandelt. Insbesondere ist es denkbar, dass beide Oberflächen 16 und 18 einer, insbesondere jeweiligen, Oberflächenbehandlung unterzogen und somit behandelt ist. Bei der Oberflächenbehandlung handelt es sich beispielsweise um Oxidieren beziehungsweise Anoxidieren und/oder um Anodisieren, sodass die Oberfläche 16 und/oder 18 beispielsweise durch Oxidieren beziehungsweise Anoxidieren und/oder durch Anodisieren behandelt ist. Hierdurch kann ein besonders fester Verbund aus dem Bauteilbereich 12 und der Stützstruktur 14 gebildet werden. Mit anderen Worten kann durch die Oberflächenbehandlung der Bauteilbereich 12 einen besonders festen Verbund mit der Stützstruktur 14 eingehen.

FIG 2 zeigt ein Flussdiagramm, anhand dessen im Folgenden ein Verfahren zum Herstellen des Bauteils 10 beschrieben wird. Bei einem ersten Schritt S1 des Verfahrens wird der Bauteilbereich 12 durch das generative Fertigungsverfahren hergestellt. Bei dem generativen Fertigungsverfahren handelt es sich vorzugsweise um 3D-Drucken, sodass der Bauteilbereich 12 beispielsweise als dreidimensionale Kunststoffkomponente, das heißt als dreidimensionale und dabei 3D-gedruckte Kunststoffkomponente hergestellt wird.

Bei einem zweiten Schritt S2 des Verfahrens wird die separat von dem Bauteilbereich 12 hergestellte Stützstruktur 14, insbesondere in deren hergestellten Zustand, bereitgestellt. Beispielsweise kann der zweite Schritt S2 umfassen, dass die Stützstruktur 14 separat und somit unabhängig von dem Bauteilbereich 12 hergestellt wird. Ferner kann es bei dem ersten Schritt S1 des Verfahrens vorgesehen sein, dass der Bauteilbereich 12 separat und somit unabhängig von der Stützstruktur 14 hergestellt wird. Im Folgenden werden der Bauteilbereich 12 und die Stützstruktur 14 auch als Komponenten bezeichnet, wobei es beispielsweise vorgesehen sein kann, dass die Komponenten in ihrem jeweils bereits hergestellten Zustand bereitgestellt werden.

Bei einem dritten Schritt S3 des Verfahrens werden die Stützstruktur 14 und der Bauteilbereich 12 miteinander verbunden, wodurch der Bauteilbereich 12 mittels der Stützstruktur 14 versteift wird. Hierdurch kann eine besonders hohe Steifigkeit und Festigkeit des Bauteils 10 insgesamt realisiert werden.

Beispielsweise werden der Bauteilbereich 12 und die Stützstruktur 14 in einem Zustand miteinander verbunden, in welchem beide Komponenten bereits, insbesondere vollständig, hergestellt sind. Ferner ist es denkbar, dass der Bauteilbereich 12 durch das generative Fertigungsverfahren und während des generativen Fertigungsverfahrens, mittels welchem der Bauteilbereich 12 hergestellt wird, mit der Stützstruktur 14 verbunden wird, sodass der Bauteilbereich 12 während seiner und durch seine Herstellung mit der zuvor beziehungsweise bereits hergestellten Stützstruktur 14 verbunden wird. Hierzu wird beispielsweise der Bauteilbereich 12 durch das generative Fertigungsverfahren an die Stützstruktur 14 angedruckt und/oder auf die Stützstruktur 14 gedruckt, nachdem die Stützstruktur 14 hergestellt und im hergestellten Zustand bereitgestellt wurde.

Aus FIG 1 ist erkennbar, dass der Bauteilbereich 12 aus mehreren Schichten 20 und somit Schicht für Schicht beziehungsweise schichtweise hergestellt wird, indem die Schichten 20 jeweils durch das generative Fertigungsverfahren hergestellt werden. Hierzu werden die Schichten 20 jeweils zumindest teilweise aufeinander beziehungsweise übereinander angeordnet und miteinander verbunden, wodurch der Bauteilbereich 12 schichtweise hergestellt beziehungsweise aufgebaut wird. Dadurch kann eine besonders komplexe, dreidimensionale Struktur des Bauteilbereichs 12 auf zeit- und kostengünstige Weise realisiert werden. Diese komplexe dreidimensionale Struktur kann mittels der Stützstruktur 14 effektiv und effizient ausgesteift werden, sodass besonders vorteilhafte, insbesondere mechanische, Eigenschaften des Bauteils 10 insgesamt dargestellt werden können. Im Vergleich zu Kunststoffkomponenten, welche ohne Stützstruktur und rein durch ein generatives Fertigungsverfahren hergestellt sind, kann das Bauteil 10 belastbarer ausgestaltet werden und somit höhere Belastungen schadfrei erstragen. Außerdem kann eine besonders komplexe Geometrie des Bauteils 10 auf kostengünstige Weise durch Verwenden des generativen Fertigungsverfahrens realisiert werden.

### Bezugszeichenliste

- 10: Bauteil
- 12: Bauteilbereich
- 14: Stützstruktur
- 16: Oberfläche
- 18: Oberfläche
- 20: Schichten
- S1: erster Schritt
- S2: zweiter Schritt
- S3: dritter Schritt

## Patentansprüche

1. Bauteil (10), mit wenigstens einem durch ein generatives Fertigungsverfahren hergestellten Bauteilbereich (12), und mit wenigstens einer separat von dem Bauteilbereich (12) hergestellten und mit dem Bauteilbereich (12) verbundenen Stützstruktur (14), mittels welcher der Bauteilbereich (12) versteift ist.

2. Bauteil (10) nach Anspruch 1,
wobei der Bauteilbereich (12) aus einem ersten Werkstoff und die Stützstruktur (14) aus einem von dem ersten Werkstoff unterschiedlichen zweiten Werkstoff gebildet ist.

3. Bauteil (10) nach Anspruch 1 oder 2,
wobei die Stützstruktur (14) durch ein von einem generativen Fertigungsverfahren unterschiedliches Fertigungsverfahren hergestellt ist.

4. Bauteil (10) nach einem der vorhergehenden Ansprüche,
wobei die Stützstruktur (14) aus einem metallischen Werkstoff und/oder aus einem keramischen Werkstoff gebildet ist.

5. Bauteil (10) nach Anspruch 4,
wobei der metallische Werkstoff einen Stahl und/oder Aliminium und/oder Titan aufweist.

6. Bauteil (10) nach einem der vorhergehenden Ansprüche,
wobei die Stutzstruktur (14) aus einem Kompositwerkstoff, insbesondere aus einem faserverstärkten Kunststoff, gebildet ist.

7. Bauteil (10) nach einem der vorhergehenden Ansprüche,
wobei die Stützstruktur (14) durch Anodisieren und/oder Anoxidieren mit dem Bauteilbereich (12) verbunden ist.

8. Bauteil (10) nach einem der vorhergehenden Ansprüche,
wobei der Baueilbereich (12) an sich und/oder die Stützstruktur (14) an sich wenigstens eine, insbesondere durch Anodisieren und/oder Oxidieren, behandelte Oberfläche (14, 16) aufweist, wobei der Bauteilberiech (12) und die Stützstruktur (14) über die Oberfläche (14, 16) miteinander verbunden sind.

9. Bauteil (10) nach einem der vorhergehenden Ansprüche,
wobei der Bauteilbereich (12) aus einem Kunststoff gebildet ist.

10. Verfahren zum Herstellen eines Bauteils (10), mit den Schritten:
- Herstellen wenigstens eines Bauteilbereiches (12) des Bauteils (10) durch ein generatives Fertigungsverfahren;
- Bereitstellen einer separat von dem Bauteilbereich (12) hergestellten Stützstruktur (14) des Bauteils (10); und
- Verbinden der Stützstruktur (14) mit dem Bauteilbereich (12), wodurch der Bauteilbereich (12) mittels der Stützstruktur (14) versteift wird.
